Europäisches Patentamt

European Patent Office

Office européen des brevets

(19)

(11) Veröffentlichungsnummer : **0 163 604**
**B1**

(12) **EUROPÄISCHE PATENTSCHRIFT**

(45) Veröffentlichungstag der Patentschrift :
**15.03.89**

(51) Int. Cl.⁴ : **F 16 B 13/02**

(21) Anmeldenummer : **85810226.2**

(22) Anmeldetag : **13.05.85**

(54) **Spreizdübel.**

(30) Priorität : **28.05.84 DE 3419923**

(43) Veröffentlichungstag der Anmeldung :
**04.12.85 Patentblatt 85/49**

(45) Bekanntmachung des Hinweises auf die Patenterteilung : **15.03.89 Patentblatt 89/11**

(84) Benannte Vertragsstaaten :
**CH DE FR GB LI SE**

(56) Entgegenhaltungen :
EP--A-- 0 013 911
EP--A-- 0 086 452
WO--A--84 /010 05
DE-A-- 2 941 953
DE-A-- 3 101 472
DE--B-- 2 644 963
DE--C-- 3 208 347
DE--U-- 1 913 806

(73) Patentinhaber : **HILTI Aktiengesellschaft**

**FL-9494 Schaan (LI)**

(72) Erfinder : **Hoffmann, Armin**
**Luitpoldstrasse 13**
**D-8034 Germering (DE)**
Erfinder : **Bisping, Heinz**
**Feichtmayerstrasse 15**
**D-8000 München 50 (DE)**
Erfinder : **Stockmayer, Peter, Dr.**
**Neue Weinsteige 25A**
**D-7000 Stuttgart 1 (DE)**

(74) Vertreter : **Wildi, Roland**
**Hilti Aktiengesellschaft Patentabteilung**
**FL-9490 Schaan (LI)**

**Beschreibung**

Die Erfindung betrifft einen Kunststoff-Spreizdübel mit im wesentlichen zylindrischem Dübelkörper, der von einer Zentralbohrung für eine Spreizschraube durchsetzt ist und beidseitig der Zentralbohrung eine Anzahl einander gegenüberliegend angeordneter, zueinander gegensinnig wellenförmig verlaufender, von der Zentralbohrung zur Aussenkontur offener Durchbrüche aufweist, wobei die Durchbrüche jeweils die Form einer sich von einem Wellenberg bis zum nächsten Wellental erstreckenden Halbwelle aufweisen und Durchbrüche auf derselben Seite des Dübelkörpers derart angeordnet sind, dass das Wellental eines Durchbruches im wesentlichen in einer senkrecht zur Dübelhauptachse verlaufenden Ebene des Wellenberges des folgenden Durchbruches liegt.

Spreizdübel der voran beschriebenen Art dienen der Verankerung in Aufnahmematerialien unterschiedlichster Art. Es kann sich dabei um relativ homogene Materialien, wie Beton, oder auch um Hohlkammern aufweisendes Mauerwerk mit vergleichsweise niedriger Festigkeit handeln. Zur Verankerung wird der Spreizdübel in ein Bohrloch eingeschoben und anschliessend durch eine Spreizschraube unter Weitung gegen die Bohrlochwandung gepresst. Der Durchmesser des Bohrloches schwankt erfahrungsgemäss von Fall zu Fall, was unter anderem bei Verwendung gleicher Bohrwerkzeuge mit unterschiedlicher Festigkeit und wechselndem Aufbau des Aufnahmematerials zusammenhängt.

Insbesondere beim Einsatz bekannter Spreizdübel in Aufnahmematerial mit niedriger Festigkeit oder mit Hohlkammern und ausserdem beim Vorhandensein eines zu grossen Bohrloches tritt das Problem einer ungenügenden Schraubenführung und eines ungenügenden Haltes der Spreizschraube im Dübelkörper auf. Die Folge davon sind unzureichende Verankerungswerte des Spreizdübels.

Es ist zwar ein Kunststoff-Spreizdübel bekannt, der zur Verbesserung der Schraubenführung einen nicht durchgehend längsgeschlitzten Spreizbereich aufweist. Ein axialer Abschnitt des Spreizbereichs weist hintereinander angeordnete, von der Zentralbohrung zur Aussenkontur offene V-förmige Durchbrüche auf.

Wenngleich ein seitliches Ausweichen der Spreizschraube bei diesem bekannten Spreizdübel dank des zwischen den Durchbrüchen in Umfangsrichtung geschlossenen Spreizbereichs unterbunden werden kann, muss als erheblicher Nachteil hohe Instabilität des Dübelkörpers in Kauf genommen werden. Insbesondere führt dies zu einem Verwinden des Dübelkörpers beim Eindrehen der Spreizschraube, da die Wandteile zwischen den Durchbrüchen nicht zur Versteifung des Dübelkörpers beitragen. Der Nachteil dieses Verformungsverhaltens des Dübelkörpers sind unzureichende Verankerungswerte, insbesondere aufgrund der starken Schwankungen unterworfenen Sitzes der Spreizschraube im Dübelkörper.

Die DE-A-3 101 472 zeigt einen Kunststoff-Spreizdübel mit Zentralbohrung und Längsschlitz, wobei der Längsschlitz beidseits der Zentralbohrung zueinander wechselweise wellenförmig verläuft. Dieser wechselweise wellenförmige Verlauf des Längsschlitzes kann das seitliche Ausweichen der Spreizschraube nicht ausreichend verhindern, da der Dübelkörper aufgrund des in Längsrichtung durchgehenden Längsschlitzes in zwei Hälften aufgespalten ist.

Einen Vorteil hinsichtlich des Ausweichens der Spreizschraube bringt der ferner aus der DE-C-3 208 347 bekannte Kunststoff-Spreizdübel bei welchem beidseits einer Zentralbohrung je eine Anzahl in Längsrichtung hintereinander angeordneter, wellenförmiger Durchbrüche vorgesehen sind. Allerdings weisen diese Durchbrüche zwischen Wellenberg und Wellental einen Bereich auf, der entlang einer die Dübelhauptachse senkrecht schneidenden Ebene verläuft. Aufgrund dieses Bereiches weist dieser bekannte Kunststoff-Spreizdübel den Nachteil einer erheblichen Querschnittsschwächung auf, was zu einem Reissen des Dübelkörpers und damit zu einem Abfall der Verankerungswerte führt.

Der Erfindung liegt die Aufgabe zugrunde, einen sich für unterschiedliche Aufnahmematerialien eignenden Kunststoff-Spreizdübel zu schaffen, der sowohl ein Verlaufen der Spreizschraube unterbindet, als auch sich durch ausreichende Festigkeit zur Erzielung hoher Verankerungswerte auszeichnet.

Erfindungsgemäss wird die Aufgabe bei dem eingangs dargelegten Kunststoff-Spreizdübel dadurch gelöst, dass die Uebergänge zwischen Wellental und Wellenberg der beidseitig der Zentralbohrung angeordneten Durchbrüche einander und eine senkrecht zur Dübelhauptachse verlaufende Ebene kreuzen.

Zwischen den wellenförmigen Durchbrüchen jeder Seite verbleiben streifenförmige Wandteile, die beidendig an den nicht mit Durchbrüchen versehenen Bereich des Mantels angebunden sind. Die Wandteile tragen somit zur Versteifung des Dübelkörpers erheblich bei. Die wellenförmige Ausbildung der Durchbrüche gewährleistet ein gleichmässiges Aufweiten des Dübelkörpers beim Spreizvorgang, so dass einerseits ein Verankerungsangriff im Aufnahmematerial und andererseits ein gleichmässiger Angriff der Spreizschraube erzielt wird. Zur gleichmässigen Aufweitung des Dübelkörpers trägt vor allem auch der gegensinnige Verlauf der Durchbrüche der einen Seite zu den Durchbrüchen der anderen Seite bei.

Die Wellenform der Durchbrüche kann annähernd sinusförmig verlaufen oder sich aus Geraden zusammensetzen, die im wesentlichen entsprechend einer Welle eckig aneinandergefügt sind. Das gleichmässige Weitungsverhalten des Dübelkörpers wird dadurch begünstigt, dass beidseitig der Zentralbohrung axial anschliessend an ein Wellental eines Durchbruches jeweils der Wellenberg des axial benachbarten Durchbruches folgt. Zweckmässig ist der Verlauf der Durchbrüche analog dem Einschraubdrehsinn der Spreizschraube gewählt.

Die in Umfangsrichtung gleichmässige Aufweitung des Dübelkörpers wird ferner begünstigt, indem der Uebergang zwischen dem Wellental und dem Wellenberg einander beidseitig der Zentralbohrung gegenüberliegender Durchbrüche auf einer die Dübelhauptachse schneidenden Ebene liegt. Aus dieser Anordnung ergibt sich, dass von den einander paarweise beidseitig der Zentralbohrung gegenüberliegenden Durchbrüchen dem Wellental des einen Durchbruches ein Wellenberg des anderen Durchbruches direkt gegenüberliegt.

Mit Vorteil schneiden die Wellenberge und Wellentäler der beidseitig der Zentralbohrung einander axial benachbarten Durchbrüche gemeinsam eine senkrecht zur Dübellängsachse verlaufende Ebene. Durch das dieserart erzielte axiale Ueberlappen der Wellenberge und Wellentäler von jeweils vier Durchbrüchen ist in der besagten Ebene der Dübelkörper vierfach durchbrochen, wobei solche Ebenen entsprechend der Anzahl axial hintereinander angeordneter Durchbrüche vorhanden sind. An diesen Stellen zeichnet sich der Dübelkörper durch erhöhte Weitbarkeit aus, da in den dazwischenliegenden axialen Abschnitten des Dübelkörpers nur jeweils zwei einander gegenüberliegende Durchbrüche gegeben sind. Die Weitbarkeit der vierfach durchbrochenen Stellen wird noch verbessert, indem die aneinandergrenzenden Wellenberge und Wellentäler sich axial etwa um das 1- bis 3-fache der lichten Weite der Durchbrüche überlappen.

In Weiterbildung der Erfindung sind die Wellenberge und die Wellentäler wenigstens eines Teils der Durchbrüche symmetrisch zur Dübelhauptachse radial versetzt und stehen im wesentlichen in einem dem Durchmesser der Zentralbohrung entsprechenden radialen Abstand zueinander. Die symmetrische Anordnung begünstigt wiederum die gleichmässige radiale Weitung des Dübelkörpers. Zur optimalen Aufweitung trägt aber auch der aufgezeigte radiale Abstand der Wellenberge zu den Wellentälern bei, wobei sich im besonderen eine Zentralbohrung mit im wesentlichen rechteckigem Querschnitt bewährt, in dessen Längsseite die Durchbrüche eintreten. Der radiale Abstand der Wellenberge zu den Wellentälern entspricht demnach der Längserstreckung des Querschnitts der Zentralbohrung. Die in Setzrichtung ersten und letzten Durchbrüche bestehen nur aus einer Halbwelle, die zweckmässig in einen parallel zur Dübelhauptachse gerichteten Schlitz ausläuft.

Nach einem weiteren Vorschlag der Erfindung weisen die Durchbrüche eine dem 1- bis 2-fachen des Aussendurchmessers des Dübelkörpers entsprechende Länge auf. Dieserart werden Durchbrüche geschaffen, die eine die Festigkeit des Dübelkörpers nicht beeinträchtigende Krümmung aufweisen.

Die Erfindung wird nachstehend anhand einer Zeichnung, die ein Ausführungsbeispiel eines erfindungsgemässen Spreizdübels wiedergibt, näher erläutert. Es zeigen :

Fig. 1 den Spreizdübel in Ansicht ;
Fig. 2 einen Schnitt durch den Spreizdübel nach Fig. 1, gemäss Schnittverlauf II-II ;
Fig. 3 einen Schnitt durch den Spreizdübel nach Fig. 1, gemäss Schnittverlauf III-III ;
Fig. 4 einen Schnitt durch den Spreizdübel nach Fig. 1, gemäss Schnittverlauf IV-IV ;
Fig. 5 einen Schnitt durch den Spreizdübel nach Fig. 1, gemäss Schnittverlauf V-V.

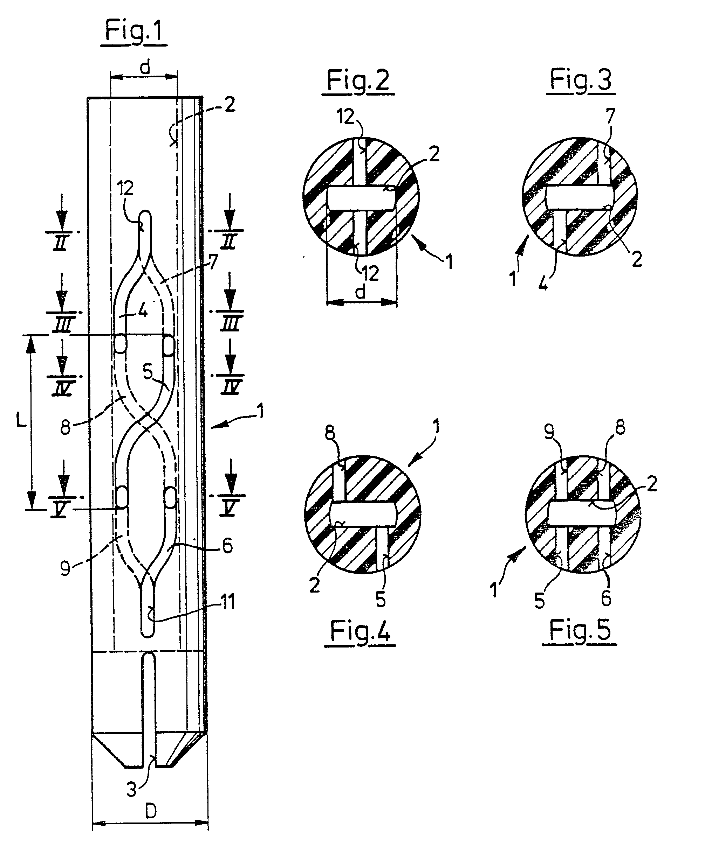

Der in Fig. 1 dargestellte Spreizdübel weist einen insgesamt mit 1 bezeichneten, zylindrischen Dübelkörper 1 auf. Dieser ist über den Grossteil seiner Länge von einer Zentralbohrung 2 mit im wesentlichen rechteckigem Querschnitt durchsetzt. Einführrichtungsseitig geht die Zentralbohrung in in Einführrichtung offene Längsschlitze 3 über. Im Bereich der Zentralbohrung 2 sind beidseitig zu dieser wellenförmige Durchbrüche 4, 5, 6, 7, 8, 9 vorgesehen. Jedem Durchbruch 4, 5, 6 auf der einen Seite ist ein zu diesem gegensinnig verlaufender Durchbruch 7, 8, 9 auf der anderen Seite zugeordnet. Endseitig überlappen sich axial die Durchbrüche 4, 5, 6 der einen Seite mit den Durchbrüchen 7, 8, 9 der anderen Seite. Die Länge L der Durchbrüche 4, 5, 6, 7, 8, 9 entspricht etwa dem Eineinhalbfachen des Aussendurchmessers D des Dübelkörpers 1. Die in Setzrichtung ersten und letzten Durchbrüche 6, 9 bzw. 4, 7 bestehen aus nur einer Halbwelle, d.h. aus einem Wellental bzw. einem Wellenberg, und einem daran anschliessenden, parallel zur Dübelhauptachse gerichteten Schlitz 11, 12.

Die Fig. 2 zeigt den zur Zentralbohrung 2 sowie zur Aussenkontur des Dübelkörpers 1 hin offenen Schlitz 12, an den die Durchbrüche 4, 7 anschliessen. Ferner verdeutlicht die Figur den rechteckigen Querschnitt der Längsbohrung 2.

Der Fig. 3 ist die radiale Versetzung des Wellentales des Durchbruches 4 zum Wellenberg des gegenüberliegenden Durchbruches 7 entnehmbar. Ebenso zeigt die Fig. 4 die radiale Versetzung des Wellenberges des Durchbruches 5 zum Wellental des Durchbruches 8.

Wie die Fig. 2 bis 4 verdeutlichen, ist der Dübelkörper 1 über die wesentliche Längserstreckung der Durchbrüche 4, 5, 7, 8 durch diese und den anschliessenden Schlitz 12 beidseitig der Zentralbohrung 2 einfach durchbrochen. Im axialen Ueberlappungsbereich der axial aneinandergrenzenden Durchbrüche 5, 6, 8, 9 ist der Dübelkörper 1 hingegen beidseitig der Zentralbohrung zweifach durchbrochen. In den Ueberlappungsbereichen ist der Dübelkörper 1 demzufolge leichter aufweitbar als in den übrigen Bereichen, was insbesondere beim Verankern in Aufnahmematerialien mit Hohlkammern von Vorteil ist.

**Patentansprüche**

1. Kunststoff-Spreizdübel mit im wesentlichen zylindrischem Dübelkörper (1), der von einer Zentralbohrung (2) für eine Spreizschraube durchsetzt ist und beidseitig der Zentralbohrung (2) eine Anzahl einander gegenüberliegend angeordneter, zueinander gegensinnig wellenförmig verlaufender, von der Zentralbohrung (2) zur Aussenkontur offener Durchbrüche (4, 5, 6, 7, 8, 9) aufweist, wobei die Durchbrüche (4, 5, 6, 7, 8, 9) jeweils die Form einer sich von einem Wellenberg bis zum nächsten Wellental erstreckenden Halbwelle aufweisen und Durchbrüche (4, 5, 6, 7, 8, 9) auf derselben Seite des Dübelkörpers (1) derart angeordnet sind, dass das Wellental eines Durchbruches (4, 5, 6, 7, 8, 9) im wesentlichen in einer senkrecht zur Dübelhauptachse verlaufenden Ebene des Wellenberges des folgenden Durchbruches (4, 5, 6, 7, 8, 9) liegt, dadurch gekennzeichnet, dass die Uebergänge zwischen Wellental und Wellenberg der beidseitig der Zentralbohrung (2) angeordneten Durchbrüche (4, 5, 6, 7, 8, 9) einander und eine senkrecht zur Dübelhauptachse verlaufende Ebene kreuzen.

2. Spreizdübel nach Anspruch 1, dadurch gekennzeichnet, dass die Wellenberge und Wellentäler der beidseitig der Zentralbohrung einander axial benachbarten Durchbrüche (4, 5, 6, 7, 8, 9) gemeinsam die senkrecht zur Dübelhauptachse verlaufende Ebene schneiden.

3. Spreizdübel nach einem der Ansprüche 1 oder 2, dadurch gekennzeichnet, dass die Wellenberge und die Wellentäler wenigstens eines Teils der Durchbrüche (5, 8) symmetrisch zur Dübelhauptachse radial versetzt sind und im wesentlichen in einem dem Durchmesser (d) der Zentralbohrung (2) entsprechenden radialen Abstand zueinander stehen.

4. Spreizdübel nach einem der Ansprüche 1 bis 3, dadurch gekennzeichnet, dass die Durchbrüche (4, 5, 6, 7, 8, 9) eine dem 1- bis 2-fachen des Aussendurchmessers (D) des Dübelkörpers (1) entsprechende Länge (L) aufweisen.

## Claims

1. A plastics expansible dowel having a substantially cylindrical dowel body (1) which is penetrated by a central bore (2) for an expansion screw and has on both sides of the central bore (2) a number of mutually oppositely arranged openings (4, 5, 6, 7, 8, 9) which extend in opposingly wavelike manner with regard to one another and which are open from the central bore (2) to the outer contour, in which respect the openings (4, 5, 6, 7, 8, 9) have respectively the shape of a half wave extending from one wave crest as far as the next wave trough and openings (4, 5, 6, 7, 8, 9) on the same side of the dowel body (1) are arranged in such a way that the wave trough of one opening (4, 5, 6, 7, 8, 9) lies substantially in a plane, extending perpendicular to the main axis of the dowel, of the wave crest of the following opening (4, 5, 6, 7, 8, 9) characterised in that the transitions between wave trough and wave crest of the openings (4, 5, 6, 7, 8, 9) arranged on both sides of the central bore (2) intersect one another and a plane extending perpendicular to the main axis of the dowel.

2. An expansible dowel according to claim 1, characterised in that the wave crests and wave troughs of the openings (4, 5, 6, 7, 8, 9) which are axially adjacent to one another on both sides of the central bore jointly intersect the plane extending perpendicular to the main axis of the dowel.

3. An expansible dowel according to one of claims 1 or 2, characterised in that the wave crests and the wave troughs of at least a part of the openings (5, 8) are radially offset symmetrically to the main axis of the dowel and stand substantially at a radial spacing from one another which corresponds to the diameter (d) of the central bore (2).

4. An expansible dowel according to one of claims 1 to 3, characterised in that the openings (4, 5, 6, 7, 8, 9) have a length (L) which corresponds to 1 up to 2 times the outside diameter (D) of the dowel body (1).

## Revendications

1. Cheville à expansion en matière plastique avec un corps de cheville (1) sensiblement cylindrique qui est traversé par un alésage central (2) pour une vis d'écartement et présente, de part et d'autre de l'alésage central (2), une pluralité d'ajours (4, 5, 6, 7, 8, 9) ouverts s'étendant de l'alésage central (2) en direction du contour extérieur, disposés en face les uns des autres et s'étendant de manière ondulée en sens inverse les uns des autres, les ajours (4, 5, 6, 7, 8, 9) présentant chacun la forme d'une demi-onde s'étendant d'une crête de l'ondulation jusqu'au creux suivant de l'ondulation et les ajours (4, 5, 6, 7, 8, 9) étant disposés du même côté du corps de cheville (1) de telle façon que le creux de l'ondulation d'un ajour (4, 5, 6, 7, 8, 9) se situe sensiblement dans un plan de la crête de l'ondulation de l'ajour suivant (4, 5, 6, 7, 8, 9) orienté perpendiculairement à l'axe principal de la cheville, caractérisée en ce que les passages entre la crête et le creux de l'ondulation des ajours (4, 5, 6, 7, 8, 9) disposés des deux côtés de l'alésage central (2) se croisent mutuellement et coupent un plan orienté perpendiculairement à l'axe principal de la cheville.

2. Cheville à expansion selon la revendication 1, caractérisée en ce que les crêtes et les creux des ondulations des ajours (4, 5, 6, 7, 8, 9) axialement voisins de part et d'autre de l'alésage central coupent ensemble le plan orienté perpendiculairement à l'axe principal de la cheville.

3. Cheville à expansion selon l'une des revendications 1 ou 2, caractérisée en ce que les crêtes et les creux des ondulations d'au moins une partie des ajours (5, 8) sont décalés radialement par rapport à l'axe central de la cheville et se situent sensiblement à une distance radiale les uns par rapport aux autres qui correspond au diamètre (d) de l'alésage central (2).

4. Cheville à expansion selon l'une des revendications 1 à 3, caractérisée en ce que les ajours (4, 5, 6, 7, 8, 9) présentent une longueur (L) qui correspond à 1 à 2 fois le diamètre extérieur (D) du corps de cheville (1).

Fig.1

Fig.2

Fig.3

Fig.4

Fig.5